(19) Europäisches Patentamt

**European Patent Office**

Office européen des brevets

(11) Veröffentlichungsnummer: **0 152 078**
**B1**

(12) EUROPÄISCHE PATENTSCHRIFT

(45) Veröffentlichungstag der Patentschrift: **05.09.90**

(21) Anmeldenummer: **85101358.1**

(22) Anmeldetag: **08.02.85**

(51) Int. Cl.⁵: **C 12 C 1/04**

(54) **Verfahren zum Trocknen von Malz in einer Vertikaldarre.**

(30) Priorität: **10.02.84 DE 3404804**

(43) Veröffentlichungstag der Anmeldung:
**21.08.85 Patentblatt 85/34**

(45) Bekanntmachung des Hinweises auf die
Patenterteilung:
**05.09.90 Patentblatt 90/36**

(84) Benannte Vertragsstaaten:
**AT BE CH FR GB IT LI NL SE**

(56) Entgegenhaltungen:
**DE-A-1 604 920**
**DE-C- 934 159**
**FR-A-1 052 723**
**FR-A-1 424 911**
**GB-A- 913 890**

**L. NARZISS: "Die Technologie der
Malzbereitung", 6. Auflage, 1976, Seiten 289-
291, Enke Verlag, Stuttgart, DE.**

(73) Patentinhaber: **Numberger, Christian Konrad
Mühlberg 38 1/2
D-8257 St. Wolfgang (DE)**

(72) Erfinder: **Numberger, Christian Konrad
Mühlberg 38 1/2
D-8257 St. Wolfgang (DE)**

(74) Vertreter: **Wächtershäuser, Günter, Dr.
Tal 29
D-8000 München 2 (DE)**

**Beschreibung**

Die Erfindung betrifft ein Verfahren zum Trocknen von Malz in einer Vertikaldarre mit mindestens einem, sich zwischen einer oberen Grünmalzbeschickungseinrichtung und einer unteren Malzaustragsschleuse erstreckenden, senkrechten Malzschacht mit mehreren übereinanderliegenden Strömungszonen für die Trocknungsluft mit den Malzschacht quer durchziehenden Luftkanälen mit perforierten Seitenwandungen, welche zum Teil auf Lufteinlaß und zum Teil auf Luftauslaß geschaltet sind.

Aus Ludwig Narziss, "Die Technologie der Malzbereitung", herausg. 1976, Seiten 289 bis 291, ist bereits ein Verfahren zum Trocknen von Malz in einer Vertikaldarre bekannt. Dabei bewegt sich das Darrgut jedoch nicht kontinuierlich nach unten. Der Darrschacht ist vielmehr durch Schieber in drei Kammern unterteilt, welche chargenweise gefüllt und entleert werden. Es wird also zunächst die untere Kammer entleert und danach der Inhalt der mittleren Kammer in die untere Kammer und sodann der Inhalt de obersten Kammer in die mittlere Kammer überführt, worauf schließlich die oberste Kammer mit Grünmalz beschickt wird. Dieser diskontinuierliche Betrieb ist äußerst aufwendig. Die Trocknungsluft strömt in allen drei Zonen in Querrichtung durch das Darrgut und die Strömungsrichtung wird periodisch umgeschaltet. Nach der Umschaltung wird die Feuchte wieder in die bereits stärker getrockneten Zonen des Darrguts zurückgetrieben. Durch dieses Entfeuchten und erneutes Befeuchten kommt es zu Schrumpfungen und zu Enzymverlusten. Eine Durchströmung des Darrguts innerhalb der einzelnen Horden in nur einer Querrichtung ist nicht möglich, da dies zu einer ungleichmäßigen Strömungsverteilung und somit zu ungleichmäßiger Trocknung und schließlich zu ungenügender Malzqualität führen würde. Aus diesen Gründen hat sich ein solches Verfahren bisher nicht durchgesetzt.

Ferner ist aus der FR—A—1 052 723 eine Vertikaldarre zum Konditionieren von Getreide bekannt. Sie weist eine untere Austragsschleuse auf, die jedoch nicht perforiert und auch nicht mit einer Gebläseluftbeaufschlagungseinrichtung versehen ist.

Der Erfindung liegt die Aufgabe zugrunde, ein Verfahren zum Trocknen von Malz in einer Vertikaldarre zu schaffen, welches kontinuierlich betrieben werden kann und Malz hoher einheitlicher und gleichbleibender Qualität liefert.

Die gestellte Aufgabe wird dadurch gelöst, daß eine Vertikaldarre verwendet wird, bei der zwei Reihen von den Malzschacht quer durchziehenden Luftkanälen mit perforierten Seitenwandungen vorgesehen sind und auch die Austragsschleuse perforiert ausgebildet ist und mit einem Luftgebläsedruck beaufschlagbar ist, und daß alle Luftkanäle der oberen Reihe und die Austragsschleuse ständig auf Lufteinströmung geschaltet sind, während die Luftkanäle der unteren Reihe unter periodischer Umschaltung jeweils zum Teil auf Lufteinströmung und zum Teil auf Luftausströmung geschaltet sind.

Nach einer vorteilhaften Ausgestaltung der Erfindung sind sämtliche Luftkanäle so miteinander verbunden, daß die gesamte Trocknungsluft nach oben durch das obere Ende des Malzschachts entweicht.

Besonders vorteilhafte Ergebnisse werden erhalten, wenn die Luftkanäle in benachbarten Darrzonen, in Vertikalrichtung gesehen, gegeneinander versetzt sind.

Im folgenden wird die Erfindung anhand von Zeichnungen näher erläutert; es zeigen:

Fig. 1 eine schematische Teildarstellung einer kontinuierlich arbeitenden Vertikaldarre im Längsschnitt;

Fig. 2 eine Wende- und Angleichvorrichtung für die Vertikaldarre in Seitenansicht; und

Fig. 3 einen Schnitt entlang der Linie V—V der Fig. 2.

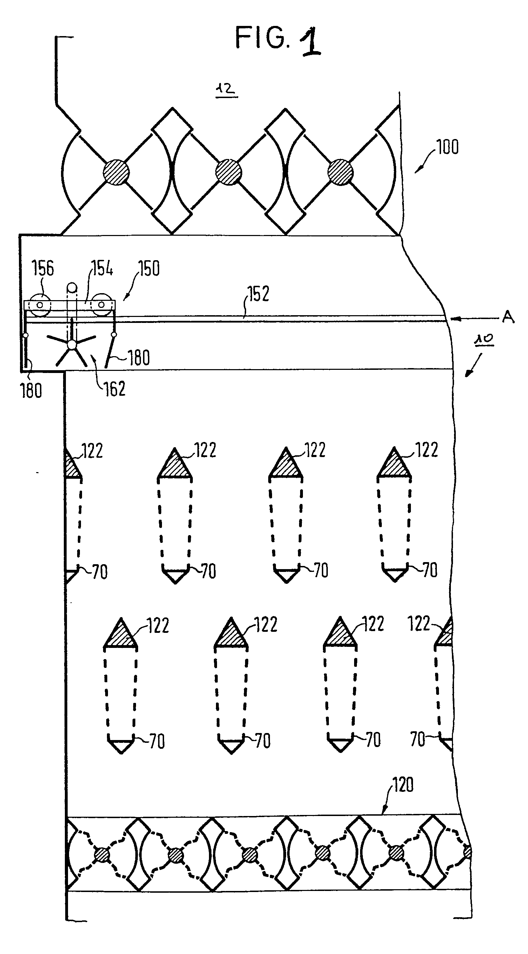

Zunächst soll der prinzipielle Aufbau der Vertikaldarre anhand der Figur 1 erläutert werden. In Figur 1 ist die Vertikaldarre allgemein mit 10 bezeichnet. Sie befindet sich in vertikaler Richtung unterhalb einer Keimanlage 12. Zwischen der Keimanlage 12 mit Grünmalz und der Vertikaldarre 10 befindet sich eine Grünmalzbeschickungseinrichtung 100. Am unteren Ende ist die Vertikaldarre 10 durch eine Malzaustragsschleuse 120 verschlossen. Die Vertikaldarre 10 wird über die Grünmalzbeschickungseinrichtung 100 mit dem Grünmalz aus der Keimanlage 12 beschickt. Durch die Betätigung der Malzaustragsschleuse 120 wird das Darrgut der Vertikaldarre 10 entnommen. Auf diese Weise bewegt sich das Darrgut kontinuierlich oder quasi-kontinuierlich in der Vertikaldarre 10 von oben nach unten.

Die Vertikaldarre ist in vertikaler Richtung in drei Darrzonen unterteilt, nämlich in

eine obere Schwelkzone,

eine sich daran anschließende mittlere Verzukkerungszone und schließlich

eine untere Abdarrzone.

In der obersten Darrzone sind Luftkanäle 70 vorgesehen, welche sich über die gesamte Breite der Vertikaldarre 10 erstrecken. Die Seitenwandungen dieser Luftkanäle 70 sind perforiert. Die oberen Bereiche der Luftkanäle 70 laufen spitz zusammen, damit die Bewegung des Darrguts nicht behindert wird. Besonders vorteilhaft ist die Tatsache, daß durch diese Luftkanäle 70 Grünmalzbrücken gebildet werden, welche im Verlauf des Trocknungsvorgangs sukzessive absacken und durch neue Brücken ersetzt werden. Vorzugsweise haben die Luftkanäle 70 eine tropfenförmige Querschnittsgestalt. Dies führt zu einem leichteren und schnelleren Mischen unterhalb der sich jeweils neu bildenden Brücken, und außerdem wird ein Eindringen von Malzkeimen in die Luftkammern und Luftkanäle 70 verhindert. In der mittleren Darrzone sind entsprechende Luftkanäle 70 angeordnet.

Die Vertikaldarre 10 ist stets bis zu Höhe der Pfeillinie A mit Darrgut gefüllt. In dem Maß, wie fertiges Darrgut durch die Malzaustragsschleuse 120 entnommen wird, erfolgt eine Beschickung der Vertikaldarre 10 mit Grünmalz durch die Grünmalzbeschickungseinrichtung 100. Dazu kann eine Wendeund Ausgleichsvorrichtung 150 verwendet werden, welche die Bildung von einzelnen Haufen, entsprechend den Öffnungen der Grünmalzbeschickungseinrichtung 100, verhindert.

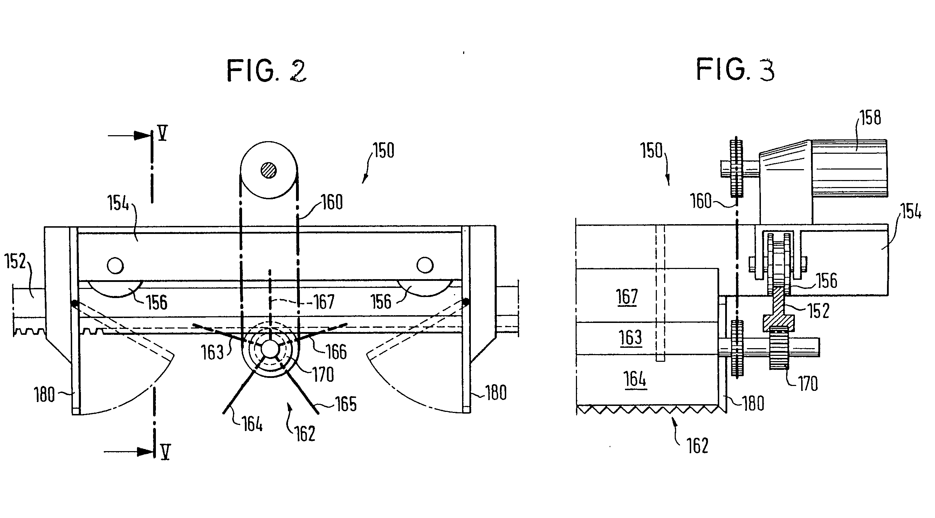

In den Fig. 2 und 3 ist diese Wende- und Ausgleichsvorrichtung 150 im einzelnen gezeigt. Sie umfaßt zwei Schienen 152 und einen Wagen 154 mit vier Rollen 156, wobei jeder Schiene 152 zwei Rollen zugeordnet sind. Der Wagen 154 trägt einen Motor 158, welcher über einen Kettentrieb 160 mit einem Ausgleichswerkzeug 162 verbunden ist. Das Ausgleichswerkzeug 162 ist rotierbar und weist fünf mit gleichen Winkelabständen angeordnete Leisten 163 bis 167 auf. Bei Betätigung des Motors 158 wird das Ausgleichswerkzeug 162 mittels des Kettentriebes 160 gedreht. Ferner wird ein Ritzel 170 gedreht, welches in eine Zahnstangenverzahnung der Schiene 152 eingreift und auf diese Weise den Wagen 154 über die Darre bewegt. Hierdurch werden die von der Überführungsschleuse gebildeten Grünmalzhaufen egalisiert. Die Wende- und Ausgleichsvorrichtung weist zusätzlich zwei Angleichrechen 180 auf. Diese sind für den Hin- und Herbetrieb klappbar. Außerdem sind sie in ihrer Höhe verstellbar. Die Wende- und Angleichvorrichtung kann auch als Meßwagen ausgebildet werden. Es können insbesondere Vorrichtungen zum Erfassen der Höhe des Grünmalzes vorgesehen sein sowie Vorrichtungen zur Messung der Temperatur und der Feuchtigkeit. Insbesondere können diese Fühler über die gesamte Breite der Wende- und Angleichvorrichtung 150 verteilt angeordnet werden, so daß man einen Einblick in die Verteilung dieser Parameter bekommt.

Bei der Vertikaldarre 10 nach Fig. 1 erfolgt die Luftzufuhr ausschließlich über die Luftkanäle 70 und über die untere, perforierte Malzaustragsschleuse 120. Dabei sind die Luftkanäle 70 der mittleren Darrzone gegenüber den Luftkanälen 70 der obersten Darrzone versetzt angeordnet. Die Lufteinlaßkanäle 70 haben, wie bereits erwähnt, etwa tropfenförmige Querschnittsgestalt. Dabei ist sowohl der obere Bereich als auch der untere Bereich zugespitzt. Der obere Bereich 122 wird vorzugsweise aus einem wärmeisolierenden Material hergestellt. Die perforierten Seitenwandungen laufen nach unten schräg oder konisch zusammen.

Im folgenden soll eine bevorzugte Betriebsweise der Vertikaldarre 10 erläutert werden. Dabei strömt die Trocknungsluft durch die Malzaustragsschleuse 120 ein sowie durch sämtliche Luftkanäle 70. Die Luft entweicht also ausschließlich durch die oberste Darrzone nach oben. Es liegt somit ein besonders günstiger Gegenstrom vor. Im Bereich der Luftkanäle 70 liegt auch ein Querstrom vor. Durch die vielen, im richtigen Abstand versetzt eingebauten Luftkanäle 70 kommt es zu einer besonders ausgeglichenen Luftführung und somit zu einer gleichmäßigen Trocknung. Außerdem ist der Aufbau der Vertikaldarre 10 besonders kompakt. Ferner erreicht man hohe Durchsatzleistungen. Die versetzten Luftkanäle 70 führen zu einer Durchmischung des Darrguts. Dieses bildet zwischen benachbarten Luftkanälen 70 besonders leicht Brücken, welche das Darrgut intermittierend auflockern. Beim Übergang von der obersten Darrzone in die mittlere Darrzone wird das Darrgut wegen der vesetzten Anordnung der Luftkanäle 70 durchmischt. Hierdurch wird die Trocknung vergleichmäßigt. Der Stromverbrauch ist besonders günstig, da die unteren Darrzonen, in denen ein höherer Druck vorliegt, einen geringeren Luftdurchsatz benötigen. Die Druckverhältnisse sind insbesondere durch die Brückenbildung aufgrund der Unterstützung des Darrguts durch die Luftkanäle 70 günstig.

Bei einer abgewandelten Betriebsweise kann in der mittleren Darrzone auch ausschließlich eine Querströmung vorliegen. In diesem Falle werden die Luftkanäle 70 in der mittleren Darrzone alternierend auf Lufteinlaß und auf Luftauslaß geschaltet. Bei dieser abgewandelten Betriebsweise strömt die durch die Malzaustragsschleuse 120 einströmende Trocknungsluft vorzugsweise durch die auf Luftauslaß geschalteten Luftkanäle 70 der mittleren Darrzone aus.

Die Luftkanäle 70 können einzeln geregelt werden. Es ist besonders vorteilhaft, an den einzelnen Luftkanälen 70 Fühler anzubringen, z.B. an den Spitzen dieser Kanäle. Hier stören solche Fühler am wenigsten. Hierdurch kann man über die relativ große Querschnittsfläche der Vertikaldarre von z.B. 4 × 5 m das Betriebsverhalten eingehend überwachen. Man kann die Fühler zur Temperaturmessung, zur Druckmessung und zur Feuchtigkeitsmessung verwenden und somit ein vollständiges Bild der Strömungs- und Trocknungsverhältnisse über den gesamten Querschnitt gewinnen.

Bei einer abgewandelten Ausführungsform kann man zwischen der obersten und der mittleren Darrzone sowie zwischen der mittleren und der untersten Darrzone eine Austragsschleuse ähnlich der Malzaustragsschleuse 120 vorsehen. Hierdurch kann eine bessere Trennung der Luftströmungen erreicht werden. Dabei werden diese zusätzlichen Schleusen vorzugsweise so betrieben, daß das Darrgut einmal nach rechts und einmal nach links herabfällt. Eine solche Betriebsweise ist auch für die Schleusen 100 und 120 bevorzugt.

**Patentansprüche**

1. Verfahren zum Trocknen von Malz in einer Vertikaldarre mit mindestens einem, sich zwischen einer oberen Grünmalzbeschickungseinrichtung und einer unteren Malzaustragsschleuse erstreckenden, senkrechten Malzschacht mit mehreren übereinanderliegenden Strömungszonen für die Trocknungsluft mit den Malzschacht quer durchziehenden Luftkanälen mit perforierten Seitenwandungen, welche zum Teil auf Lufteinlaß und zum Teil auf Luftauslaß geschaltet sind, dadurch gekennzeichnet,

daß eine Vertikaldarre verwendet wird, bei der zwei Reihen von den Malzschacht quer durchziehenden Luftkanälen (70) mit perforierten Seitenwandungen vorgesehen sind und auch die Austragsschleuse (120) perforiert ausgebildet ist und mit einem Luftgebläsedruck beaufschlagbar ist, und

daß alle Luftkanäle (70) der oberen Reihe und die Austragsschleuse ständig auf Lufteinströmung geschaltet sind, während die Luftkanäle (70) der unteren Reihe unter periodischer Umschaltung jeweils zum Teil auf Lufteinströmung und zum Teil auf Luftausströmung geschaltet sind.

2. Verfahren nach Anspruch 1, dadurch gekennzeichnet, daß sämtliche Luftkanäle (70) so miteinander verbunden sind, daß die gesamte Trocknungsluft nach oben durch das obere Ende des Malzschachtes entweicht.

## Revendications

1. Procédé de séchage du malt dans une touraille verticale comportant au moins une cuve à malt, verticale, s'étendant entre un dispositif supérieur de chargement de malt vert et un sas inférieur de déchargement de malt vert, et comportant plusieurs zones d'écoulement superposées pour l'air de séchage, des canaux d'air comportant des parois latérales perforées, étant disposés transversalement à travers la cuve à malt, lesquels sont en partie mis en oeuvre comme entrée d'air et en partie comme sortie d'air, caractérisé par le fait

qu'on utilise une touraille verticale dans laquelle deux rangées de canaux d'air (70) dotées de parois latérales perforées sont diposés transversalement à travers la cuve à malt, et également que le sas de déchargement (120) est réalisé avec des perforations et est apte à recevoir une pression de soufflage d'air, et

que tous les canaux d'air (70) de la rangée supérieure et le sas de déchargement sont utilisés de façon permanente comme admission d'air, tandis que les canaux d'air (70) de la rangée inférieure sont utilisés, avec commutation périodique, à chaque fois en partie comme admission d'air et en partie comme échappement d'air.

2. Procédé selon la revendication 1, caractérisé par le fait que tous les canaux d'air (70) sont reliés les uns aux autres de sorte que tout l'air de séchage s'échappe vers le haut par l'extrémité supérieure de la cuve à malt.

## Claims

1. A process for drying malt in a vertical maltdrying kiln with at least one vertical malt compartment which extends between an upper green malt feeding device and a lower malt outlet and which has several flow zones one above the other for the drying air and which has airducts transversing the malt compartment and having perforated sidewalls which can be partly switched for air inlet and partly for air outlet, characterized in that,

a vertical kiln is used whereby two rows of airducts (70) with perforated sidewalls are provided, which transverse the malt compartment and that also the malt outlet (120) is perforated and impressable with an airblower pressure and

that all airducts (70) of the upper row and the malt outlet are constantly switched for air intake while the airducts (70) of the lower row are partly switched for air intake and partly for air outlet with periodic reversal.

2. A process according to claim 1, characterized in that all airducts (70) are interconnected in such a fashion that the entire drying air escapes upward through the upper end of the malt compartment.

# FIG. 1

# FIG. 2

# FIG. 3

EP 0 152 078 B1